# EUROPEAN PATENT APPLICATION

(11) **EP 4 714 742 A1**
(43) Date of publication of application: **25.03.2026**
(21) Application number: 24844389.7
(22) Date of filing: 31.05.2024
(51) Int. Cl.: B60Q 1/08, B60Q 1/26, B60W 50/14, B60W 50/00, B60W 30/00, B60W 30/095

(54) **VEHICLE, VEHICLE CONTROL METHOD, AND INTELLIGENT DRIVING CONTROL UNIT**

(30) Priority: 25.07.2023 CN 202310923436
(71) Applicant: Shenzhen Yinwang Intelligent Technologies Co., Ltd., Shenzhen, Guangdong 518110 (CN)
(72) Inventor: LI, Zengshan, Shenzhen, Guangdong 518129 (CN)
(74) Representative: Körber, Martin Hans
(86) International application number: PCT/CN2024/096699
(87) International publication number: WO 2025/020694

(57) **Abstract**

A vehicle, a vehicle control method, and an intelligent driving control unit are provided. A vehicle (100, 300) includes at least one sensor (310), an intelligent driving control unit (320), and a drive projection apparatus (330). An output end of the at least one sensor is coupled to an input end of the intelligent driving control unit, and a first output end of the intelligent driving control unit is coupled to a first input end of the drive projection apparatus. The at least one sensor generates external environment data based on an external environment of the vehicle, and sends the external environment data to the intelligent driving control unit. The intelligent driving control unit generates projection image data based on the external environment data, and sends the projection image data to the drive projection apparatus. The drive projection apparatus outputs a projection image based on the projection image data. This vehicle resolves problems that a link topology of an intelligent headlamp in the vehicle is complex, a data transmission link is long, and a data transmission delay is large.

## Description

This application claims priority to Chinese Patent Application No. 202310923436.7, filed with the China National Intellectual Property Administration on July 25, 2023 and entitled "VEHICLE, VEHICLE CONTROL METHOD, AND INTELLIGENT DRIVING CONTROL UNIT", which is incorporated herein by reference in its entirety.

### TECHNICAL FIELD

This application relates to the field of intelligent vehicle technologies, and in particular, to a vehicle, a vehicle control method, and an intelligent driving control unit.

### BACKGROUND

As vehicles continuously develop towards electrification, intelligence, networking, and sharing, driving experience of users is continuously improved. Specifically, the vehicle may include an intelligent headlamp (headlamp), and the intelligent headlamp may implement functions such as safe lighting, intelligent driving assistance, and entertainment interaction, to improve driving experience of the users.

However, currently, a link topology of the intelligent headlamp in the vehicle is complex, a data transmission link is long, and a data transmission delay is large.

### SUMMARY

This application provides a vehicle, a vehicle control method, and an intelligent driving control unit, to resolve problems that a link topology of an intelligent headlamp in a current vehicle is complex, a data transmission link is long, and a data transmission delay is large.

To achieve the foregoing objective, this application uses the following technical solutions.

According to a first aspect, this application provides a vehicle. The vehicle includes at least one sensor, an intelligent driving control unit, and a drive projection apparatus, an output end of the at least one sensor is coupled to an input end of the intelligent driving control unit, and a first output end of the intelligent driving control unit is coupled to a first input end of the drive projection apparatus. The at least one sensor generates external environment data based on an external environment of the vehicle, and sends the external environment data to the intelligent driving control unit. The intelligent driving control unit generates projection image data based on the external environment data, and sends the projection image data to the drive projection apparatus. The drive projection apparatus outputs a projection image based on the projection image data.

Optionally, the vehicle may include a road vehicle, a water vehicle, an air vehicle, an industrial device, an agricultural device, an entertainment device, or the like. The vehicle is a vehicle in a broad sense. For example, the vehicle may be a vehicle (for example, a commercial vehicle, a passenger vehicle, a motorcycle, a flying car, a train, an airplane, or a ship), an industrial vehicle (for example, a forklift, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in this application. Optionally, the projection image may be used to implement lighting enhancement, assisted driving, a light carpet, multimedia, and the like. For a specific function that can be implemented by the projection image, refer to the conventional technology. This is not limited in this application.

Based on this solution, the external environment data is generated through the at least one sensor. The intelligent driving control unit generates the projection image data based on the external environment data, and sends the projection image data to the drive projection apparatus, so that the drive projection apparatus outputs the projection image based on the projection image data. In comparison with the conventional technology in which a camera is used to photograph the external environment of the vehicle to generate an external environment image, a CDC generates the projection image data based on the external environment image, sends the projection image data to an SoC in an HCM, and the SoC transmits the projection image data to a left DMD and a right DMD through a serializer, so that the left DMD and the right DMD output the projection image based on the projection image data. In this way, a link topology is simpler, a data transmission link is shorter, and a data transmission delay can be reduced.

With reference to the first aspect, in a possible implementation, the vehicle further includes a vehicle control unit, and the vehicle control unit controls the drive projection apparatus to output the projection image based on the projection image data.

With reference to the first aspect, in a possible implementation, an input end of the vehicle control unit is coupled to a second output end of the intelligent driving control unit, and an output end of the vehicle control unit is coupled to a second input end of the drive projection apparatus. The intelligent driving control unit further outputs a first control signal, and the vehicle control unit outputs a second control signal based on the first control signal, where the second control signal controls the drive projection apparatus to output the projection image based on the projection image data.

With reference to the first aspect, in a possible implementation, the intelligent driving control unit includes a system-on-chip and a microprocessor, an input end of the system-on-chip is coupled to the input end of the intelligent driving control unit, an output end of the system-on-chip is coupled to the first output end of the intelligent driving control unit, and an output end of the microprocessor is coupled to the second output end of the intelligent driving control unit. The system-on-chip generates the projection image data based on the external environment data. The microprocessor outputs a third control signal, where the third control signal controls the drive projection apparatus to output the projection image based on the projection image data.

Based on this solution, the drive projection apparatus may be controlled through the vehicle control unit to output the projection image based on the projection image data, or the drive projection apparatus may be controlled through the intelligent driving control unit to output the projection image based on the projection image data. A control solution is more flexible. In addition, when the vehicle control unit is faulty, the intelligent driving control unit may be used to control the drive projection apparatus to output the projection image, thereby improving reliability.

With reference to the first aspect, in a possible implementation, the drive projection apparatus includes a drive circuit and a projection circuit, and an output end of the drive circuit is coupled to an input end of the projection circuit. The drive circuit receives a control signal, and generates a drive signal based on the control signal. The projection circuit outputs the projection image based on the projection image data under driving of the drive signal.

With reference to the first aspect, in a possible implementation, the projection circuit includes a headlamp of the vehicle.

With reference to the first aspect, in a possible implementation, the vehicle further includes a plurality of controller area network buses, and the plurality of controller area network buses are coupled to the second output end of the intelligent driving control unit. The intelligent driving control unit further receives a driving signal, generates a driving control signal based on the driving signal, and sends the driving control signal through the plurality of controller area network buses to control the vehicle.

With reference to the first aspect, in a possible implementation, the plurality of controller area network buses include a chassis controller area network bus, a chassis redundant controller area network bus, and a power controller area network bus.

With reference to the first aspect, in a possible implementation, the at least one sensor includes at least one of a camera, a microwave radar, and a lidar.

According to a second aspect, this application provides a vehicle control method. The vehicle includes at least one sensor, an intelligent driving control unit, and a drive projection apparatus. An output end of the at least one sensor is coupled to an input end of the intelligent driving control unit, and a first output end of the intelligent driving control unit is coupled to a first input end of the drive projection apparatus. The method includes: The at least one sensor generates external environment data based on an external environment of the vehicle, and sends the external environment data to the intelligent driving control unit. The intelligent driving control unit generates projection image data based on the external environment data, and sends the projection image data to the drive projection apparatus. The drive projection apparatus outputs a projection image based on the projection image data.

With reference to the second aspect, in a possible implementation, the vehicle further includes a vehicle control unit, and that the drive projection apparatus outputs the projection image based on the projection image data includes: The drive projection apparatus outputs the projection image based on the projection image data under control of the vehicle control unit.

With reference to the second aspect, in a possible implementation, an input end of the vehicle control unit is coupled to a second output end of the intelligent driving control unit, an output end of the vehicle control unit is coupled to a second input end of the drive projection apparatus, and the method further includes: The intelligent driving control unit outputs a first control signal; and the vehicle control unit outputs a second control signal based on the first control signal, where the second control signal is used to control the drive projection apparatus to output the projection image based on the projection image data.

With reference to the second aspect, in a possible implementation, the intelligent driving control unit includes a system-on-chip and a microprocessor, an input end of the system-on-chip is coupled to the input end of the intelligent driving control unit, an output end of the system-on-chip is coupled to the first output end of the intelligent driving control unit, and an output end of the microprocessor is coupled to the second output end of the intelligent driving control unit. That the intelligent driving control unit generates the projection image data based on the external environment data includes: The system-on-chip generates the projection image data based on the external environment data. That the drive projection apparatus outputs the projection image based on the projection image data includes: The drive projection apparatus outputs the projection image based on the projection image data under control of a third control signal output by the microprocessor.

With reference to the second aspect, in a possible implementation, the drive projection apparatus includes a drive circuit and a projection circuit, an output end of the drive circuit is coupled to an input end of the projection circuit, and that the drive projection apparatus outputs the projection image based on the projection image data includes: The drive circuit receives a control signal, and generates a drive signal based on the control signal; and the projection circuit outputs, under driving of the drive signal, the projection image based on the projection image data.

With reference to the second aspect, in a possible implementation, the vehicle further includes a plurality of controller area network buses, the plurality of controller area network buses are coupled to the second output end of the intelligent driving control unit, and the method further includes: When the vehicle control unit is faulty, the intelligent driving control unit receives a driving signal, generates a driving control signal based on the driving signal, and sends the driving control signal through the plurality of controller area network buses to control the vehicle.

A third aspect of this application provides an intelligent driving control unit. An input end of the intelligent driving control unit is coupled to an output end of at least one sensor, a first output end of the intelligent driving control unit is coupled to a first input end of a drive projection apparatus, and the intelligent driving control unit is configured to receive external environment data, where the external environment data is generated by the at least one sensor based on an external environment of a vehicle; determine projection image data based on the external environment data; and send the projection image data to the drive projection apparatus, so that the drive projection apparatus outputs a projection image based on the projection image data.

With reference to the third aspect, in a possible implementation, a second output end of the intelligent driving control unit is coupled to an input end of a vehicle control unit, and an output end of the vehicle control unit is coupled to a second input end of the drive projection apparatus. The intelligent driving control unit further outputs a first control signal, where the first control signal controls the vehicle control unit to output a second control signal, and the second control signal controls the drive projection apparatus to output the projection image based on the projection image data.

With reference to the third aspect, in a possible implementation, the intelligent driving control unit includes a system-on-chip and a microprocessor, an input end of the system-on-chip is coupled to a first input end of the intelligent driving control unit, an output end of the system-on-chip is coupled to the first output end of the intelligent driving control unit, and an output end of the microprocessor is coupled to the second output end of the intelligent driving control unit. The system-on-chip generates the projection image data based on the external environment data; and the microprocessor outputs a third control signal, where the third control signal is used to control the drive projection apparatus to output the projection image based on the projection image data.

With reference to the third aspect, in a possible implementation, the second output end of the intelligent driving control unit is coupled to a plurality of controller area network buses. The intelligent driving control unit further receives a driving signal, generates a driving control signal based on the driving signal, and sends the driving control signal through the plurality of controller area network buses to control the vehicle.

A fourth aspect of this application provides an intelligent driving control method. The intelligent driving control method may be applied to an intelligent driving control unit. An input end of the intelligent driving control unit is coupled to an output end of at least one sensor, a first output end of the intelligent driving control unit is coupled to a first input end of a drive projection apparatus, and the method includes: receiving external environment data, where the external environment data is generated by the at least one sensor based on an external environment of a vehicle. Projection image data is determined based on the external environment data, and the projection image data is sent to the drive projection apparatus, so that the drive projection apparatus outputs a projection image based on the projection image data.

With reference to the fourth aspect, in a possible implementation, a second output end of the intelligent driving control unit is coupled to an input end of a vehicle control unit, an output end of the vehicle control unit is coupled to a second input end of the drive projection apparatus, and the method further includes: outputting a first control signal, where the first control signal controls the vehicle control unit to output a second control signal, and the second control signal controls the drive projection apparatus to output the projection image based on the projection image data.

With reference to the fourth aspect, in a possible implementation, the intelligent driving control unit includes a system-on-chip and a microprocessor, an input end of the system-on-chip is coupled to a first input end of the intelligent driving control unit, an output end of the system-on-chip is coupled to the first output end of the intelligent driving control unit, and an output end of the microprocessor is coupled to the second output end of the intelligent driving control unit. Determining the projection image data based on the external environment data includes: The system-on-chip generates the projection image data based on the external environment data. The method further includes: The microprocessor outputs a third control signal, where the third control signal controls the drive projection apparatus to output the projection image based on the projection image data.

With reference to the fourth aspect, in a possible implementation, the second output end of the intelligent driving control unit is coupled to a plurality of controller area network buses, and the method further includes: receiving a driving signal, generating a driving control signal based on the driving signal, and sending the driving control signal through the plurality of controller area network buses to control the vehicle.

For descriptions of the second aspect to the fourth aspect in this application, refer to the detailed descriptions of the first aspect. In addition, for beneficial effect described in the second aspect to the fourth aspect, refer to beneficial effect analysis of the first aspect. Details are not described herein again.

### BRIEF DESCRIPTION OF DRAWINGS

FIG. 1 is a diagram of a structure of a vehicle;
FIG. 2 is a diagram of a structure of another vehicle;
FIG. 3 is a diagram of a structure of a vehicle according to an embodiment of this application;
FIG. 4 is a diagram of a projection image of a vehicle according to an embodiment of this application;
FIG. 5 is a diagram of a structure of another vehicle according to an embodiment of this application;
FIG. 6 is a diagram of a structure of still another vehicle according to an embodiment of this application;
FIG. 7 is a diagram of a structure of yet another vehicle according to an embodiment of this application;
FIG. 8 is a diagram of a structure of still yet another vehicle according to an embodiment of this application;
FIG. 9 is a diagram of a structure of further another vehicle according to an embodiment of this application;
FIG. 10 is a schematic flowchart of a vehicle control method according to an embodiment of this application;
FIG. 11 is a schematic flowchart of another vehicle control method according to an embodiment of this application;
FIG. 12 is a schematic flowchart of an intelligent driving control method according to an embodiment of this application; and
FIG. 13 is a schematic flowchart of another intelligent driving control method according to an embodiment of this application.

### DESCRIPTION OF EMBODIMENTS

The making and use of embodiments are discussed in detail below. It should be appreciated, however, that many applicable inventive concepts provided in this application may be implemented in a plurality of specific environments. The discussed specific embodiments are merely used to describe specific manners to implement and use this specification and this technology, and do not limit the scope of this application.

Unless otherwise defined, all technical terms used herein have the same meaning as those commonly known to a person of ordinary skill in the art.

The circuits or other components may be described as or referred to as "configured to" perform one or more tasks. In this case, the term "configured to" is used for implying a structure by indicating that a circuit/component includes a structure (for example, a circuit system) that performs one or more tasks during operation. Therefore, even when a specified circuit/component is currently not operable (for example, not opened), the circuit/component may also be referred to as being configured to perform the task. Circuits/components used in conjunction with the "configured to" phrase include hardware, for example, a circuit for performing an operation.

The following describes the technical solutions in embodiments of this application with reference to the accompanying drawings in embodiments of this application. In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural. In addition, in the embodiments of this application, terms such as "first" and "second" do not limit a quantity or an execution sequence.

In this application, terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

Before embodiments of this application are described, technical terms and background technologies in this application are first described.

A headlamp control module (headlamp control module, HCM) is an electronic device configured to control a headlamp of a vehicle. The headlamp control module is configured to control on/off and brightness of the headlamp of the vehicle based on a speed of the vehicle, a status of an engine, a steering wheel rotation status, and a signal sent by another sensor of the vehicle, to provide a proper lighting condition.

A light emitting diode driver module (light emitting diode driver module, LDM) is configured to provide a current/voltage to light up a light emitting diode, and may further adjust parameters such as brightness, a color temperature, and a color of the light emitting diode, to meet different lighting requirements.

A digital micromirror device (digital micromirror device, DMD) is a microelectromechanical system with electronic input and optical output, may also be referred to as a projection module, and is configured to output a projection image.

A controller area network with flexible data rate (CAN with flexible data rate, CAN FD) is an extended protocol based on a controller area network (controller area network, CAN) bus. The controller area network with flexible data rate increases a data length, a speed, and reliability, and allows smooth transition to a higher-speed network.

The in-vehicle Ethernet is a physical network used to connect various electrical devices in a vehicle.

A cockpit domain controller (cockpit domain controller, CDC) is an important component in an intelligent vehicle, and is responsible for managing and coordinating in-vehicle devices such as a microphone and a speaker, to implement a cockpit entertainment function, and provide a user with a more comfortable, convenient, and safe driving experience.

A system-on-chip (system-on-chip, SoC) is an integrated circuit that integrates a plurality of functions into one chip, and includes a plurality of processors, memories, interfaces, and other functional modules.

A gyroscope (gyroscope) is a sensor configured to measure angular velocity and angular displacement, and is commonly used in fields such as aerospace, automobiles, and games.

A microcontroller unit (microcontroller unit, MCU) is a single-chip system that integrates a microcontroller, a memory, an input/output interface, and another function, and may also be referred to as a microprocessor.

A serializer/deserializer (Serializer/Deserializer, SerDes) is an interface circuit for high-speed data communication.

KL15 (klemme15) is an engine ignition signal, where klemme may be understood as a pin (pin).

L3: L3 autonomous driving means that a vehicle can automatically complete driving operations and monitor a surrounding environment in a specific environment without a driver's operation. However, the driver needs to keep focused and be ready to take over the vehicle at any time to cope with situations that the autonomous driving system cannot handle.

An intelligent driving control unit is one of core components of intelligent driving. The intelligent driving control unit can perform real-time environment modeling based on sensor fusion information, plan and generate a vehicle motion path, and control the vehicle to automatically move to a corresponding location without collision.

A radio detection and ranging radar (radio detection and ranging, radar) may also be referred to as a radar, or may be referred to as a microwave radar.

An inertial measurement unit (inertial measurement unit, IMU) is an apparatus for measuring a three-axis attitude angle and a three-axis acceleration of an object. Generally, the IMU includes a three-axis gyroscope and a three-axis accelerometer, and some IMUs further include a three-axis magnetometer.

A vehicle control unit (vehicle control unit, VCU) is a core unit for vehicle control, is responsible for monitoring a status of the vehicle and instructions of the driver, and adjusts, based on the information, various parameters of the vehicle, such as a speed, acceleration, braking, and steering, to implement stable, safe, and efficient running of the vehicle. The vehicle control unit is further responsible for managing and optimizing energy flow of the vehicle, to ensure that the vehicle runs at optimal efficiency and economy. In addition, the vehicle control unit further has a fault diagnosis and safety protection function. The vehicle control unit monitors and diagnoses the status of the vehicle in real time, and takes a corresponding measure to avoid or mitigate a potential safety risk.

A network switch chip is used for network communication of an in-vehicle component.

A chassis controller area network bus may also be referred to as a chassis CAN bus. The chassis controller area network bus is a communication bus in a vehicle electronic control system, and is configured to transmit data and instructions of a chassis control module.

A chassis redundant controller area network bus may also be referred to as a chassis redundant CAN bus. The chassis redundant controller area network bus is another type of CAN bus used in the vehicle. The chassis redundant controller area network bus is configured to ensure that the electronic control system of the vehicle can still run normally when a main CAN bus is faulty.

A power controller area network bus may also be referred to as a power CAN bus, and is configured to transmit data and instructions of control modules related to vehicle power, such as an engine, a transmission, and a brake system.

As vehicles continuously develop towards electrification, intelligence, networking, and sharing, driving experience of users is continuously improved. Specifically, the vehicle may include an intelligent headlamp, and the intelligent headlamp may implement functions such as safe lighting, intelligent driving assistance, and entertainment interaction, to improve driving experience of the users.

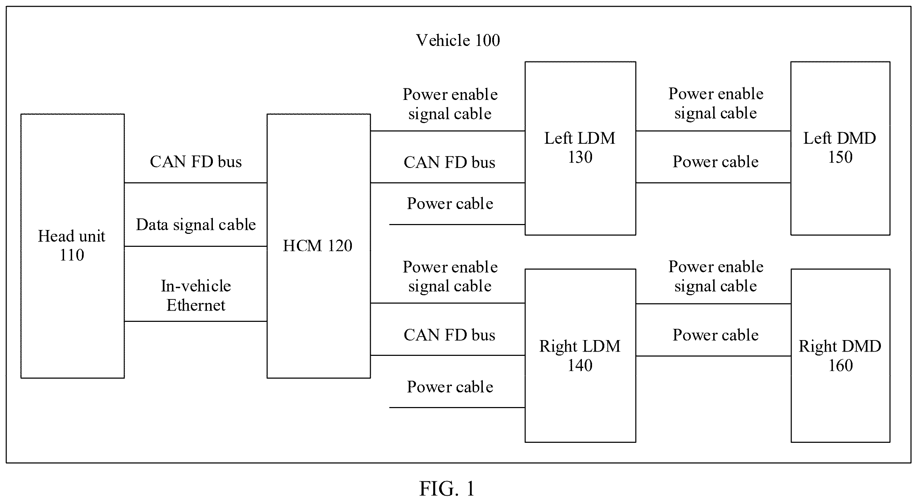

FIG. 1 is a diagram of a structure of a vehicle 100. The vehicle 100 includes a head unit 110, an HCM 120, a left LDM 130, a right LDM 140, a left DMD 150, and a right DMD 160. An output end of the head unit 110 is coupled to an input end of the HCM 120 through a CAN FD bus, a data signal cable, and the in-vehicle Ethernet. An output end of the HCM 120 is coupled to input ends of the left LDM 130 and the right LDM 140 through CAN buses and power enable signal cables. The left LDM 130 is further coupled to a power supply through a power cable, and an output end of the left LDM 130 is coupled to an input end of the left DMD 150 through a power cable and a power enable signal cable. The right LDM 140 is further coupled to the power supply through a power cable, and an output end of the right LDM 140 is coupled to an input end of the right DMD 160 through a power cable and a power enable signal cable. The left DMD 150 and the right DMD 160 are used as intelligent headlamps of the vehicle 100, and output projection images, to implement functions such as safe lighting, intelligent driving assistance, and entertainment interaction.

The head unit 110 is configured to implement information communication between a user and the vehicle 100 or between the vehicle 100 and the outside. The HCM 120 generates a control signal and a power enable signal, and sends the control signal and the power enable signal to the left LDM 130 and the right LDM 140. Under control of the control signal and the power enable signal, the left LDM 130 generates a first drive signal, and the left DMD 150 outputs a projection image under driving of the first drive signal. Under control of the control signal and the power enable signal, the right LDM 140 generates a second drive signal, and the right DMD 160 outputs a projection image under driving of the second drive signal.

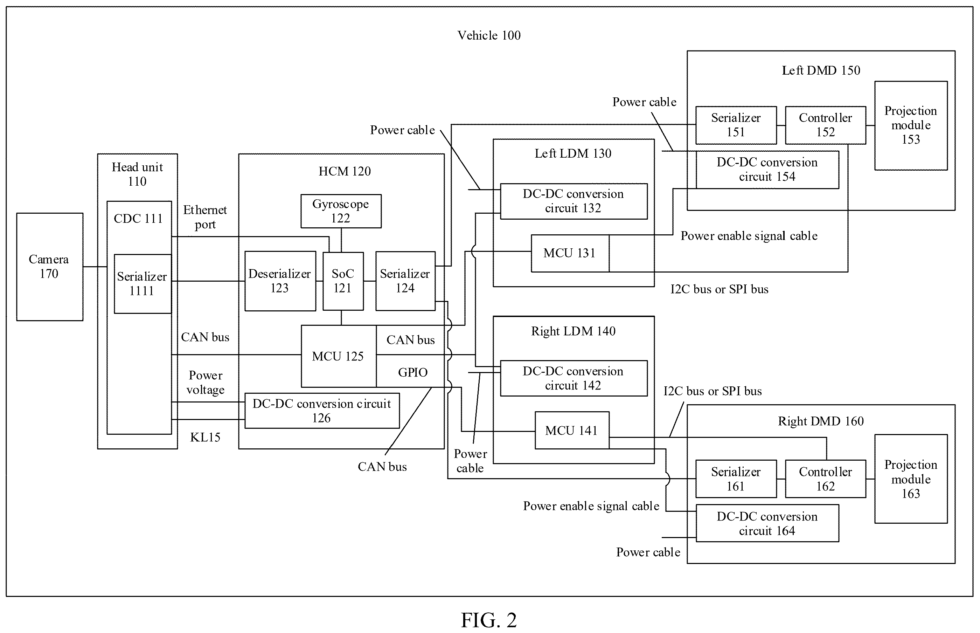

As shown in FIG. 2, the vehicle 100 may further include a camera 170 disposed outside the vehicle 100, and the head unit 110 may include a CDC 111. An output end of the camera 170 is coupled to an input end of the CDC 111, and an output end of the CDC 111 is coupled to the input end of the HCM 120. The camera 170 is configured to photograph an external environment of the vehicle 100 to generate an external environment image, and the CDC 111 is configured to generate projection image data based on the external environment image, and send the projection image data to the HCM 120.

Specifically, the HCM 120 includes an SoC 121, a gyroscope 122, a deserializer 123, a serializer 124, an MCU 125, and a direct current-direct current (direct current-direct current, DC-DC) conversion circuit 126. An output end of the deserializer 123 and an output end of the gyroscope 122 are coupled to an input end of the SoC 121, an output end of the SoC 121 is coupled to an input end of the serializer 124, and the SoC 121 is further coupled to the MCU 125. An input end of the DC-DC conversion circuit 126 is coupled to the output end of the CDC 111, and the DC-DC conversion circuit 126 is configured to receive a KL15 signal and a power voltage that are output by the CDC 111, perform voltage conversion on the power voltage, and supply power to each component in the HCM 120.

The CDC 111 includes a serializer 1111. The CDC 111 is coupled to the SoC 121 in the HCM 120 through an Ethernet (Ethernet, ETH) port. The serializer 1111 in the CDC 111 is coupled to the deserializer 123 in the HCM 120, to send the projection image data to the SoC 121. The CDC 111 is further coupled to the MCU 125 in the HCM 120 through a CAN bus, to send the control signal to the MCU 125. The MCU 125 may send a control signal to the left LDM 130 and the right LDM 140 based on the control signal.

The left LDM 130 includes an MCU 131 and a DC-DC conversion circuit 132. The right LDM 140 includes an MCU 141 and a DC-DC conversion circuit 142. The MCU 125 in the HCM 120 is coupled to the MCU 131 and the MCU 141 through the CAN bus, to send the control signal to the MCU 131 and the MCU 141. The MCU 125 in the HCM 120 is further coupled to the DC-DC conversion circuit 132 and the DC-DC conversion circuit 142 through a general purpose input output (general purpose input output, GPIO) interface, to send a power enable signal to the DC-DC conversion circuit 132 and the DC-DC conversion circuit 142. The DC-DC conversion circuit 132 and the DC-DC conversion circuit 142 are further coupled to a power supply through power cables, to perform voltage conversion, and supply power to each component in the left LDM 130 and the right LDM 140.

The left DMD 150 includes a serializer 151, a controller 152, a projection module 153, and a DC-DC conversion circuit 154. An output end of the serializer 151 is coupled to an input end of the controller 152. An output end of the controller 152 is coupled to an input end of the projection module 153. An output end of the MCU 131 in the left LDM 130 is coupled to the input end of the controller 152 through an inter-integrated circuit (inter-integrated circuit, I2C) bus or a serial peripheral interface (serial peripheral interface, SPI) bus, so that the MCU 131 sends the control signal to the controller 152. An output end of the serializer 124 in the HCM 120 is coupled to the serializer 151 in the left DMD 150, so that the serializer 124 sends the projection image data to the left DMD 150, and the projection module 153 outputs the projection image based on the projection image data. The DC-DC conversion circuit 154 is coupled to the MCU 131 in the left LDM 130 through the power enable signal cable, to receive the power enable signal sent by the MCU 131. The DC-DC conversion circuit 154 is further coupled to the power supply through a power cable, to perform voltage conversion, to supply power to each component in the left DMD 150.

The right DMD 160 includes a serializer 161, a controller 162, a projection module 163, and a DC-DC conversion circuit 164. An output end of the serializer 161 is coupled to an input end of the controller 162, and an output end of the controller 162 is coupled to an input end of the projection module 163. An output end of the MCU 141 in the right LDM 140 is coupled to the input end of the controller 162 through an I2C bus or an SPI bus, so that the MCU 141 sends a control signal to the controller 162. The output end of the serializer 124 in the HCM 120 is coupled to the serializer 161 in the right DMD 160, so that the serializer 124 sends the projection image data to the right DMD 160, and the projection module 163 outputs the projection image based on the projection image data. The DC-DC conversion circuit 164 is coupled to the MCU 141 in the right LDM 140 through the power enable signal cable, to receive the power enable signal sent by the MCU 141. The DC-DC conversion circuit 164 is further coupled to the power supply through a power cable, to perform voltage conversion, to supply power to each component in the right DMD 160.

It can be understood that the camera 170 photographs the external environment of the vehicle 100 to generate the external environment image. The CDC 111 may generate the projection image data based on the external environment image, and send the projection image data to the SoC 121 in the HCM 120. The SoC 121 transmits the projection image data to the left DMD 150 and the right DMD 160 through the serializer 124, so that the left DMD 150 and the right DMD 160 output the projection images based on the projection image data. In this way, functions such as safe lighting, intelligent driver assistance, and entertainment interaction can be implemented. However, in the vehicle 100, topologies of links between the camera 170 and the left DMD 150 and between the camera 170 and the right DMD 160 are complex, and a data transmission link is long. When the projection image data is generated based on the external environment image and is transmitted to the left DMD 150 and the right DMD 160 to output the projection images, a data transmission delay is large. In addition, the camera 170 has limited detection functions, and data processing capabilities of the CDC 111 and the HCM 120 are weak. Therefore, only simple functions can be implemented, for example, brightness adjustment, an irradiation angle, a distance, intelligent high beam, and headlamp fault detection. However, high-level autonomous driving of L3 or a higher level cannot be implemented, resulting in poor user experience.

To resolve problems that a link topology of an intelligent headlamp in a current vehicle is complex, a data transmission link is long, and a data transmission delay is large, an embodiment of this application provides a vehicle. The vehicle has a short data transmission link, so that the data transmission delay can be reduced, high-level autonomous driving can be implemented, and user experience can be improved.

Optionally, the vehicle may include a road vehicle, a water vehicle, an air vehicle, an industrial device, an agricultural device, an entertainment device, or the like. The vehicle is a vehicle in a broad sense. For example, the vehicle may be a vehicle (for example, a commercial vehicle, a passenger vehicle, a motorcycle, a flying car, a train, an airplane, or a ship), an industrial vehicle (for example, a forklift, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application.

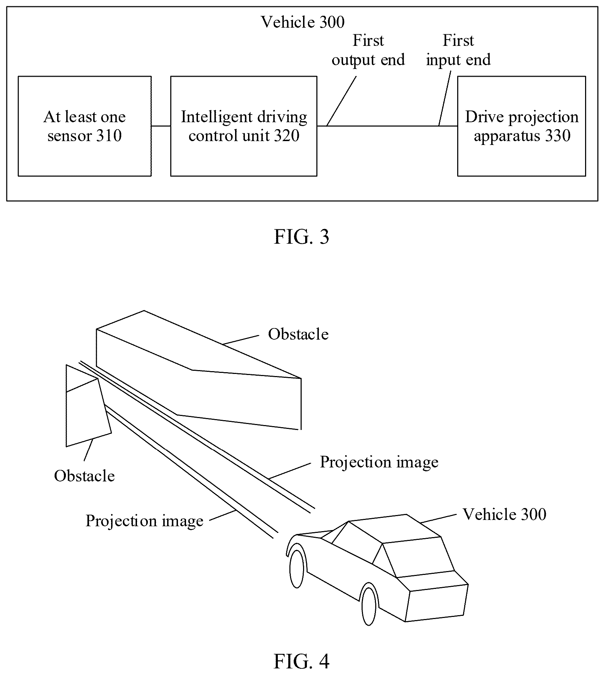

FIG. 3 shows a vehicle 300 provided in an embodiment of this application. The vehicle 300 includes at least one sensor 310, an intelligent driving control unit 320, and a drive projection apparatus 330. An output end of the at least one sensor 310 is coupled to an input end of the intelligent driving control unit 320, and a first output end of the intelligent driving control unit 320 is coupled to a first input end of the drive projection apparatus 330.

The at least one sensor 310 generates external environment data based on an external environment of the vehicle 300, and sends the external environment data to the intelligent driving control unit 320. The intelligent driving control unit 320 generates projection image data based on the external environment data, and sends the projection image data to the drive projection apparatus 330. The drive projection apparatus 330 outputs a projection image based on the projection image data.

Optionally, the at least one sensor 310 includes at least one of a camera, a microwave radar, and a light detection and ranging (light detection and ranging, Lidar) radar. This is not limited in this embodiment of this application.

Optionally, the projection image may be used to implement lighting enhancement, assisted driving, a light carpet, multimedia, and the like. For a specific function that can be implemented by the projection image, refer to the conventional technology. This is not limited in this embodiment of this application.

For example, the projection image is used to implement assisted driving. The at least one sensor 310 may generate the external environment data based on the external environment of the vehicle 300. The external environment data may include a size and a width of an obstacle on a road, and a distance between the obstacle and the vehicle 300. The intelligent driving control unit 320 may generate the projection image data based on the external environment data. The drive projection apparatus 330 may output a projection image shown in FIG. 4 based on the projection image data. The projection image indicates that a driver can pass normally, to implement assisted driving.

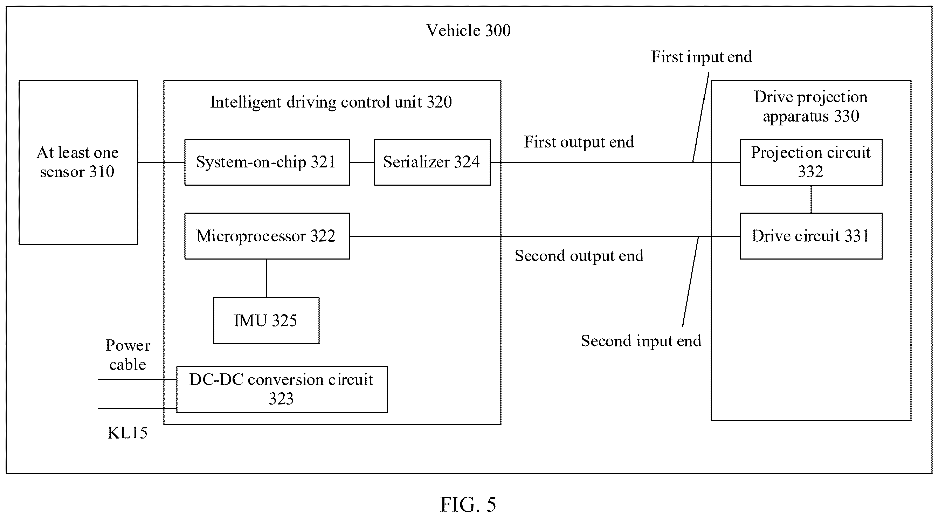

As shown in FIG. 5, in a possible embodiment, the intelligent driving control unit 320 may include a system-on-chip 321 and a microprocessor 322. An input end of the system-on-chip 321 is coupled to the input end of the intelligent driving control unit 320, an output end of the system-on-chip 321 is coupled to the first output end of the intelligent driving control unit 320, an output end of the microprocessor 322 is coupled to a second output end of the intelligent driving control unit 320, and the second output end of the intelligent driving control unit 320 is coupled to a second input end of the drive projection apparatus 330.

The system-on-chip 321 may also be referred to as an SoC. The system-on-chip 321 generates the projection image data based on the external environment data. The microprocessor 322 may also be referred to as an MCU. The microprocessor 322 outputs a third control signal, where the third control signal is used to control the drive projection apparatus 330 to output the projection image based on the projection image data.

As shown in FIG. 5, in a possible embodiment, the intelligent driving control unit 320 may further include a DC-DC conversion circuit 323, a serializer 324, and an IMU 325. The DC-DC conversion circuit 323 is coupled to a power supply through a power cable. The DC-DC conversion circuit 323 is configured to perform voltage conversion, and is further configured to receive a KL15 signal, to supply power to each component in the intelligent driving control unit 320. An input end of the serializer 324 is coupled to the output end of the system-on-chip 321, and an output end of the serializer 324 is coupled to the first output end of the intelligent driving control unit 320. The IMU 325 is coupled to the microprocessor 322, and is configured to detect a three-axis attitude angle and a three-axis acceleration of the vehicle 300.

As shown in FIG. 5, in a possible embodiment, the drive projection apparatus 330 includes a drive circuit 331 and a projection circuit 332. An output end of the drive circuit 331 is coupled to a first input end of the projection circuit 332, a second input end of the projection circuit 332 is coupled to the first input end of the drive projection apparatus 330, and an input end of the drive circuit 331 is coupled to the second input end of the drive projection apparatus 330. The drive circuit 331 receives a control signal from the intelligent driving control unit 320, and generates a drive signal based on the control signal. The projection circuit 332 outputs the projection image based on the projection image data under driving of the drive signal.

In a possible embodiment, the projection circuit 332 includes a headlamp of the vehicle 300.

Optionally, the drive projection apparatus 330 may include one drive circuit 331 and one projection circuit 332, or may include a plurality of drive circuits 331 and a plurality of projection circuits 332, and each drive circuit 331 is configured to drive one projection circuit 332.

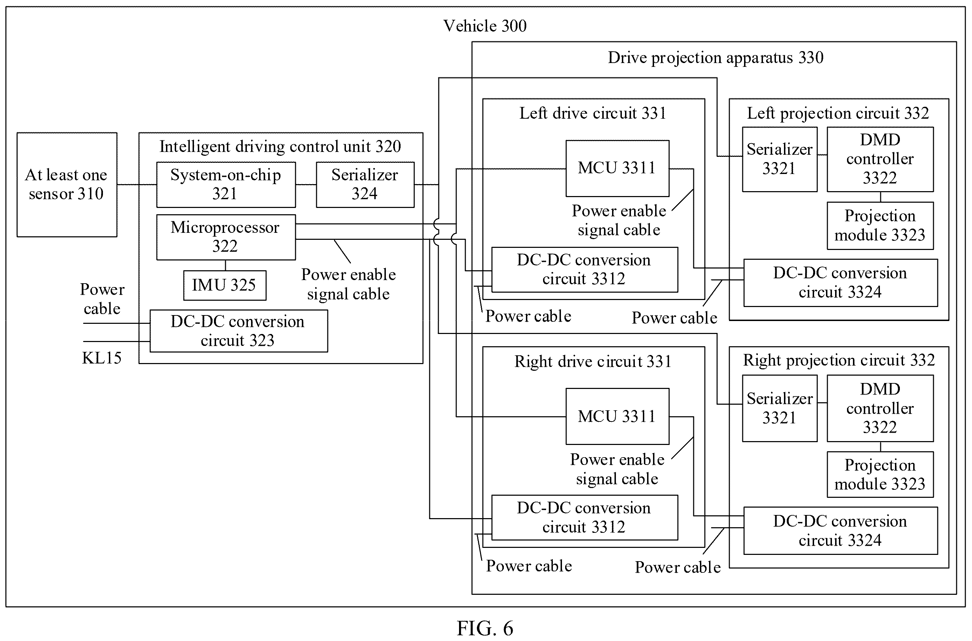

For example, as shown in FIG. 6, an example in which the drive projection apparatus 330 includes two drive circuits 331 and two projection circuits 332 is used. The two drive circuits 331 may be respectively a left drive circuit 331 and a right drive circuit 331, and the two projection circuits 332 may be respectively a left projection circuit 332 and a right projection circuit 332.

In a possible embodiment, as shown in FIG. 6, each drive circuit 331 may include an MCU 3311 and a DC-DC conversion circuit 3312. An input end of the MCU 3311 is coupled to an input end of a corresponding drive circuit 331. An input end of the DC-DC conversion circuit 3312 is coupled to the microprocessor 322 in the intelligent driving control unit 320 through a power enable signal cable, so that the DC-DC conversion circuit 3312 receives a power enable signal. The DC-DC conversion circuit 3312 is further coupled to a power supply through a power cable. The DC-DC conversion circuit 3312 is configured to perform voltage conversion, to supply power to the MCU 3311 in the drive circuit 331.

Each projection circuit 332 may include a serializer 3321, a DMD controller 3322, a projection module 3323, and a DC-DC conversion circuit 3324. An input end of the serializer 3321 is coupled to a first input end of the projection circuit 332, to receive the projection image data. An output end of the serializer 3321 is coupled to an input end of the DMD controller 3322, and an output end of the DMD controller 3322 is coupled to an input end of the projection module 3323, so that the projection module 3323 outputs the projection image based on the projection image data. An input end of the DC-DC conversion circuit 3324 is coupled to the MCU 3311 in the drive circuit 331 through the power enable signal cable, to receive the power enable signal. The DC-DC conversion circuit 3324 is further coupled to the power supply through the power cable. The DC-DC conversion circuit 3324 performs voltage conversion, to supply power to each component in the projection circuit 332.

The vehicle 300 provided in this embodiment of this application generates the external environment data through the at least one sensor 310. The intelligent driving control unit 320 generates the projection image data based on the external environment data, and sends the projection image data to the drive projection apparatus 330, so that the drive projection apparatus 330 outputs the projection image based on the projection image data. In comparison with the link topology in the vehicle 200, a link topology is simpler, a data transmission link is shorter, and a data transmission delay can be reduced. In addition, the at least one sensor 310 includes a plurality of types of sensors, and the intelligent driving control unit 320 has a stronger data processing capability. Therefore, high-level autonomous driving can be implemented, and user experience can be improved.

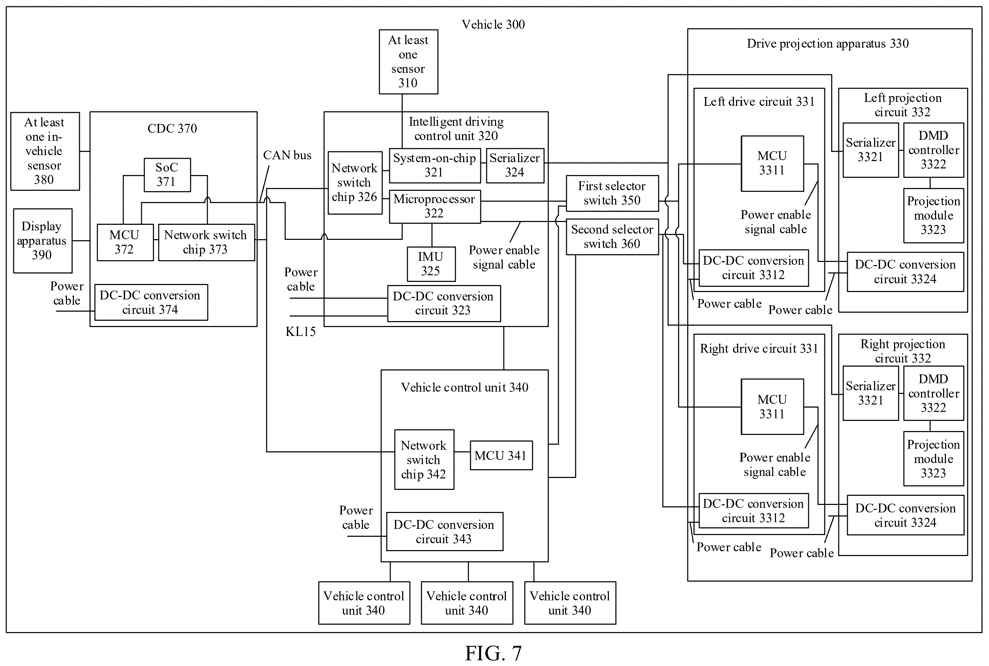

In a possible embodiment, as shown in FIG. 7, the vehicle 300 further includes a vehicle control unit 340, and the vehicle control unit 340 is configured to control the drive projection apparatus 330 to output the projection image based on the projection image data.

Specifically, an input end of the vehicle control unit 340 is coupled to the second output end of the intelligent driving control unit 320, and an output end of the vehicle control unit 340 is coupled to the second input end of the drive projection apparatus 330. The intelligent driving control unit 320 further outputs a first control signal. The vehicle control unit 340 outputs a second control signal based on the first control signal. The second control signal is used to control the drive projection apparatus 330 to output the projection image based on the projection image data.

It may be understood that the vehicle 300 provided in this embodiment of this application may output a third control signal through the microprocessor 322. The drive projection apparatus 330 may output the projection image based on the projection image data under control of the third control signal. Alternatively, the first control signal may be output through the intelligent driving control unit 320. The vehicle control unit 340 outputs the second control signal based on the first control signal. The drive projection apparatus 330 may output the projection image based on the projection image data under control of the second control signal. A specific manner of controlling the drive projection apparatus 330 to output the projection image is not limited in this embodiment of this application.

Optionally, the vehicle 300 may include one vehicle control unit 340, or may include a plurality of vehicle control units 340. This is not limited in this embodiment of this application.

Optionally, when the vehicle 300 includes the plurality of vehicle control units 340, the plurality of vehicle control units 340 may be of a star topology structure, or may be of a ring topology structure. This is not limited in this embodiment of this application.

For example, the vehicle 300 includes four vehicle control units 340. The four vehicle control units 340 may be in a star topology structure shown in FIG. 7.

In a possible embodiment, as shown in FIG. 7, the second output end of the intelligent driving control unit 320 and the output end of the vehicle control unit 340 may be coupled to the second input end of the drive projection apparatus 330 through a first selector switch 350. Therefore, the intelligent driving control unit 320 may be selected through the first selector switch 350 to control the drive projection apparatus 330 to output the projection image, or the vehicle control unit 340 may be selected to control the drive projection apparatus 330 to output the projection image.

In a possible embodiment, as shown in FIG. 7, the intelligent driving control unit 320 and the vehicle control unit 340 may be coupled to the DC-DC conversion circuit 3312 in the drive circuit 331 through a second selector switch 360 and a power enable signal cable. Therefore, the second selector switch 360 may be used to select the intelligent driving control unit 320 to output the power enable signal, or select the vehicle control unit 340 to output the power enable signal, to control the DC-DC conversion circuit 3312 to supply power to the component in the drive circuit 331. In this way, the drive circuit 331 can generate the drive signal and send the drive signal to the projection circuit 332.

It may be understood that, through the first selector switch 350 and the second selector switch 360, a manner may be selected to control the drive projection apparatus 330 to output the projection image. The control solution is more flexible. In addition, when the vehicle control unit 340 is faulty, the intelligent driving control unit 320 may be used to control the drive projection apparatus 330 to output the projection image, thereby improving reliability.

In a possible embodiment, as shown in FIG. 7, the vehicle 300 further includes a CDC 370, at least one in-vehicle sensor 380, and a display apparatus 390. An output end of the at least one in-vehicle sensor 380 is coupled to an input end of the CDC 370, an output end of the CDC 370 is coupled to an input end of the display apparatus 390, and the CDC 370 is further coupled to the intelligent driving control unit 320 and the vehicle control unit 340.

The at least one in-vehicle sensor 380 is configured to generate internal environment data based on an internal environment of the vehicle, and send the internal environment data to the CDC 370. The CDC 370 sends the internal environment data to the intelligent driving control unit 320. The intelligent driving control unit 320 further generates the projection image data based on the internal environment data and the external environment data, to implement high-level autonomous driving and improve user experience.

Optionally, the at least one in-vehicle sensor 380 includes at least one of a vehicle speed sensor, an engine speed sensor, an in-vehicle monitoring sensor, and a fuel quantity sensor.

Specifically, the CDC 370 may include an SoC 371, an MCU 372, a network switch chip 373, and a DC-DC conversion circuit 374. One end of the SoC 371 is coupled to one end of the MCU 372, another end of the SoC 371 is coupled to one end of the network switch chip 373, the MCU 372 is coupled to the network switch chip 373, and the MCU 372 in the CDC 370 may be coupled to the microprocessor 322 in the intelligent driving control unit 320 through a CAN bus. The DC-DC conversion circuit 374 is coupled to a power supply through a power cable, and the DC-DC conversion circuit 374 performs voltage conversion to supply power to each component in the CDC 370.

The intelligent driving control unit 320 further includes a network switch chip 326. The network switch chip 326 is coupled to the system-on-chip 321 and the microprocessor 322 in the intelligent driving control unit. The vehicle control unit 340 includes an MCU 341, a network switch chip 342, and a DC-DC conversion circuit 343. The MCU 341 is coupled to the network switch chip 342, and the network switch chip 342 is coupled to the network switch chip 326 in the intelligent driving control unit 320 and the network switch chip 373 in the CDC 370. The DC-DC conversion circuit 343 is coupled to a power supply through a power cable, and the DC-DC conversion circuit 343 performs voltage conversion to supply power to each component in the vehicle control unit 340.

In a possible embodiment, the CDC 370 and the intelligent driving control unit 320 may be integrated.

The vehicle 300 provided in this embodiment of this application may control, by using the vehicle control unit 340, the drive projection apparatus 330 to output the projection image based on the projection image data, or may control, through the intelligent driving control unit 320, the drive projection apparatus 330 to output the projection image based on the projection image data. A control solution is more flexible. In addition, when the vehicle control unit 340 is faulty, the intelligent driving control unit 320 may be used to control the drive projection apparatus 330 to output the projection image, thereby improving reliability.

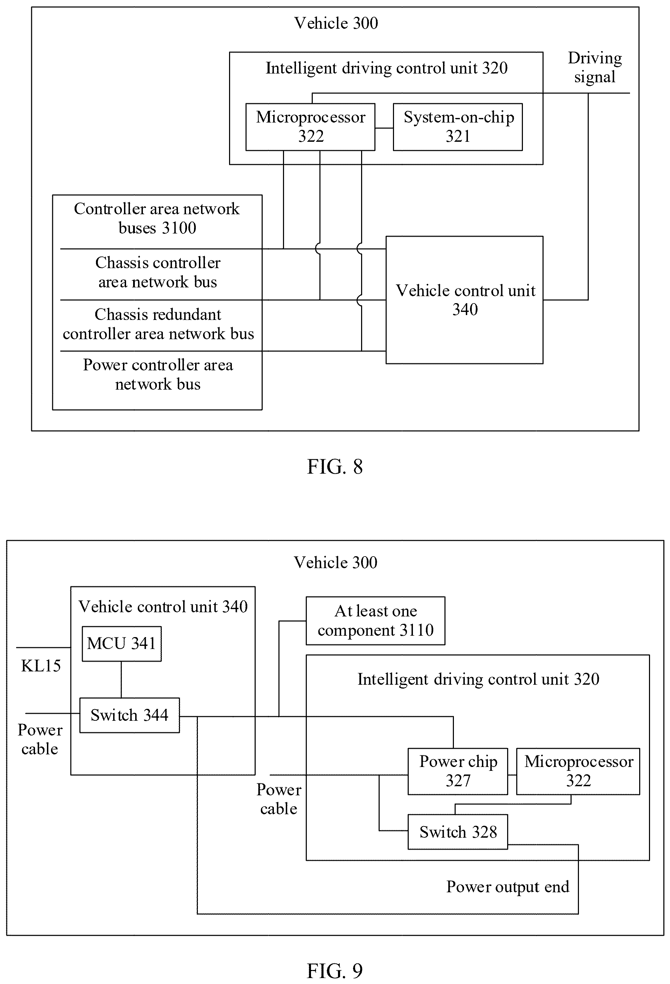

As shown in FIG. 8, in a possible embodiment, the vehicle 300 further includes a plurality of controller area network buses 3100, and the plurality of controller area network buses 3100 are coupled to the second output end of the intelligent driving control unit 320. The intelligent driving control unit 320 further receives a driving signal, generates a driving control signal based on the driving signal, and sends the driving control signal through the plurality of controller area network buses 3100 to control the vehicle 300.

Optionally, the plurality of controller area network buses include a chassis controller area network bus, a chassis redundant controller area network bus, and a power controller area network bus.

Optionally, the driving signal may include at least one of an accelerator pedal signal, a brake switch signal, and a collision signal. This is not limited in this embodiment of this application.

Specifically, the microprocessor 322 in the intelligent driving control unit 320 may receive the driving signal through a hard wire, generate the driving control signal based on the driving signal, and send the driving control signal through the plurality of controller area network buses 3100 to control the vehicle 300. The vehicle control unit 340 may be coupled to the plurality of controller area network buses 3100, and the vehicle control unit 340 may receive the driving signal through the hard wire, and send the driving control signal through the plurality of controller area network buses 3100 to control the vehicle 300. Therefore, when the vehicle control unit 340 is faulty, the microprocessor 322 in the intelligent driving control unit 320 may continue to control the vehicle 300, so that safety and reliability of the vehicle 300 can be improved.

The vehicle 300 provided in this embodiment of this application may control the vehicle 300 through the microprocessor 322 in the intelligent driving control unit 320. Therefore, when the vehicle control unit 340 is faulty, safety and reliability of the vehicle 300 can be improved.

As shown in FIG. 9, in a possible embodiment, a first power input end of the vehicle control unit 340 is coupled to a power supply through a power cable, a second power input end of the vehicle control unit 340 is coupled to a power output end of the intelligent driving control unit 320, a power output end of the vehicle control unit 340 is coupled to at least one component 3110 and a first power input end of the intelligent driving control unit 320, and a second power input end of the intelligent driving control unit 320 is coupled to the power supply through the power cable.

The vehicle control unit 340 may further include a switch 344. An input end of the switch 344 is coupled to the first power input end of the vehicle control unit 340, a controlled end of the switch 344 is coupled to an output end of the MCU 341, and an output end of the switch 344 is coupled to the power output end of the vehicle control unit 340.

The intelligent driving control unit 320 further includes a power chip 327 and a switch 328. A first input end of the power chip 327 is coupled to the first power input end of the intelligent driving control unit 320, an input end of the switch 328 and a second input end of the power chip 327 are coupled to the second power input end of the intelligent driving control unit 320, an output end of the power chip 327 is coupled to the microprocessor 322, the microprocessor 322 is coupled to a controlled end of the switch 328, and an output end of the switch 328 is coupled to the power output end of the intelligent driving control unit 320.

The MCU 341 in the vehicle control unit 340 receives a KL15 signal, and generates a control signal based on the KL15 signal. The switch 344 is configured to control, under control of the control signal, connection and disconnection of the power supply, to supply power to the at least one component 3110 and the intelligent driving control unit 320. When the intelligent driving control unit 320 determines, based on the received power supply signal, that the vehicle control unit 340 is faulty, the microprocessor 322 may generate the control signal, and the switch 328 may turn on the power supply under control of the control signal. The power supply signal may continue to supply power to the at least one component 3110 through the power output end of the intelligent driving control unit 320.

It can be understood that, in the vehicle 300 provided in this embodiment of this application, when the vehicle control unit 340 is faulty, the intelligent driving control unit 320 may continue to control connection and disconnection of the power supply, to supply power to the at least one component 3110, thereby improving reliability of the vehicle 300.

Optionally, the at least one component 3110 includes a power component, a chassis, and the like of the vehicle 300. This is not limited in this embodiment of this application.

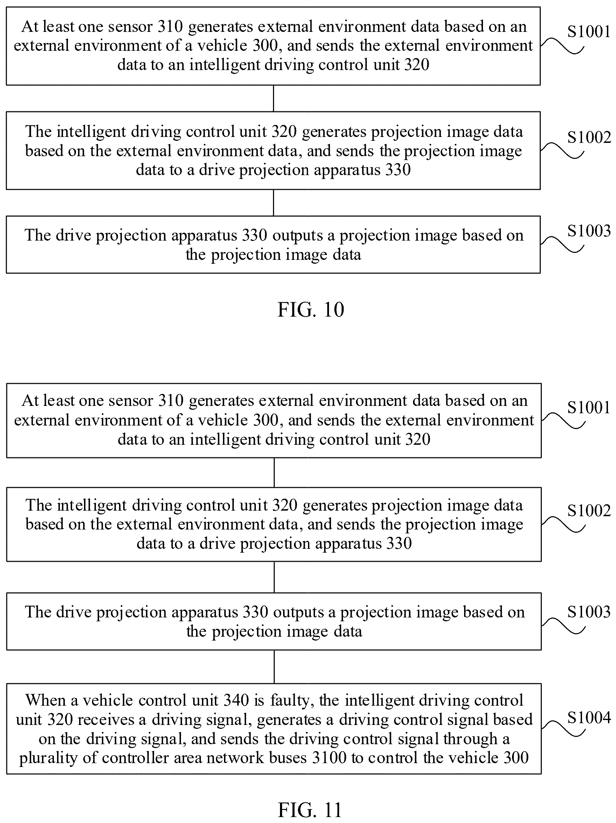

FIG. 10 is a schematic flowchart of a vehicle control method according to an embodiment of this application. The vehicle control method may be applied to the vehicle 300. The vehicle 300 includes at least one sensor 310, an intelligent driving control unit 320, and a drive projection apparatus 330. An output end of the at least one sensor 310 is coupled to an input end of the intelligent driving control unit 320, and a first output end of the intelligent driving control unit 320 is coupled to a first input end of the drive projection apparatus 330. The method includes steps S1001 to S1003.

S1001: The at least one sensor 310 generates external environment data based on an external environment of the vehicle 300, and sends the external environment data to the intelligent driving control unit 320.

Optionally, the at least one sensor 310 includes at least one of a camera, a microwave radar, and a lidar. This is not limited in this embodiment of this application.

S1002: The intelligent driving control unit 320 generates projection image data based on the external environment data, and sends the projection image data to the drive projection apparatus 330.

S1003: The drive projection apparatus 330 outputs a projection image based on the projection image data.

Optionally, the projection image may be used to implement lighting enhancement, assisted driving, a light carpet, multimedia, and the like. For a specific function that can be implemented by the projection image, refer to the conventional technology. This is not limited in this embodiment of this application.

In a possible embodiment, the vehicle 300 further includes a vehicle control unit 340. That the drive projection apparatus 330 outputs the projection image based on the projection image data includes: The drive projection apparatus 330 outputs the projection image based on the projection image data under control of the vehicle control unit 340.

Specifically, an input end of the vehicle control unit 340 is coupled to the second output end of the intelligent driving control unit 320, and an output end of the vehicle control unit 340 is coupled to the second input end of the drive projection apparatus 330. The intelligent driving control unit 320 outputs a first control signal. The vehicle control unit 340 outputs a second control signal based on the first control signal. The second control signal controls the drive projection apparatus 330 to output the projection image based on the projection image data.

In a possible embodiment, the intelligent driving control unit 320 includes a system-on-chip 321 and a microprocessor 322. An input end of the system-on-chip 321 is coupled to the input end of the intelligent driving control unit 320, an output end of the system-on-chip 321 is coupled to the first output end of the intelligent driving control unit 320, and an output end of the microprocessor 322 is coupled to the second output end of the intelligent driving control unit 320.

That the intelligent driving control unit 320 generates the projection image data based on the external environment data includes: The system-on-chip 321 generates the projection image data based on the external environment data.

That the drive projection apparatus 330 outputs the projection image based on the projection image data includes: The drive projection apparatus 330 outputs the projection image based on the projection image data under control of a third control signal output by the microprocessor 322.

The drive projection apparatus 330 includes a drive circuit 331 and a projection circuit 332. An output end of the drive circuit 331 is coupled to an input end of the projection circuit 332. That the drive projection apparatus 330 outputs the projection image based on the projection image data includes: The drive circuit 331 receives a control signal, and generates a drive signal based on the control signal; and the projection circuit 332 outputs, under driving of the drive signal, the projection image based on the projection image data.

According to the vehicle control method provided in this embodiment of this application, the at least one sensor 310 generates the external environment data. The intelligent driving control unit 320 generates the projection image data based on the external environment data, and sends the projection image data to the drive projection apparatus 330, so that the drive projection apparatus 330 outputs the projection image based on the projection image data. In comparison with the link topology in the vehicle 200, a link topology is simpler, a data transmission link is shorter, and a data transmission delay can be reduced. In addition, the at least one sensor 310 includes a plurality of types of sensors, and the intelligent driving control unit 320 has a stronger data processing capability. Therefore, high-level autonomous driving can be implemented, and user experience can be improved.

As shown in FIG. 11, in a possible embodiment, the vehicle 300 further includes a plurality of controller area network buses 3100. The plurality of controller area network buses 3100 are coupled to the second output end of the intelligent driving control unit 320. The method further includes step S1004.

S1004: When the vehicle control unit 340 is faulty, the intelligent driving control unit 320 receives a driving signal, generates a driving control signal based on the driving signal, and sends the driving control signal through the plurality of controller area network buses 3100 to control the vehicle 300.

Optionally, the plurality of controller area network buses include a chassis controller area network bus, a chassis redundant controller area network bus, and a power controller area network bus.

Optionally, the driving signal may include at least one of an accelerator pedal signal, a brake switch signal, and a collision signal. This is not limited in this embodiment of this application.

Based on this, an embodiment of this application further provides an intelligent driving control unit 320. A structure of the intelligent driving control unit 320 may be the structure of the intelligent driving control unit 320 shown in any one of FIG. 3 and FIG. 5 to FIG. 9. An input end of the intelligent driving control unit 320 is coupled to an output end of at least one sensor 310, a first output end of the intelligent driving control unit 320 is coupled to a first input end of the drive projection apparatus 330, and the intelligent driving control unit 320 is configured to receive external environment data, where the external environment data is data generated by at least one sensor 31 based on an external environment of the vehicle 300; determine projection image data based on the external environment data; and send the projection image data to the drive projection apparatus 330, so that the drive projection apparatus 330 outputs a projection image based on the projection image data.

Optionally, the at least one sensor 310 includes at least one of a camera, a microwave radar, and a lidar. This is not limited in this embodiment of this application.

Optionally, the projection image may be used to implement lighting enhancement, assisted driving, a light carpet, multimedia, and the like. For a specific function that can be implemented by the projection image, refer to the conventional technology. This is not limited in this embodiment of this application.

In a possible embodiment, a second output end of the intelligent driving control unit 320 is coupled to an input end of the vehicle control unit 340, and an output end of the vehicle control unit 340 is coupled to a second input end of the drive projection apparatus 330. The intelligent driving control unit 320 further outputs a first control signal. The first control signal controls the vehicle control unit 340 to output a second control signal, and the second control signal controls the drive projection apparatus 330 to output the projection image based on the projection image data.

In a possible embodiment, the intelligent driving control unit 320 includes a system-on-chip 321 and a microprocessor 322. An input end of the system-on-chip 321 is coupled to a first input end of the intelligent driving control unit 320, an output end of the system-on-chip 321 is coupled to the first output end of the intelligent driving control unit 320, and an output end of the microprocessor 322 is coupled to the second output end of the intelligent driving control unit 320. The system-on-chip 321 generates the projection image data based on the external environment data, and the microprocessor 322 outputs a third control signal, where the third control signal controls the drive projection apparatus 330 to output the projection image based on the projection image data.

In a possible embodiment, the second output end of the intelligent driving control unit 320 is coupled to a plurality of controller area network buses 3100. The intelligent driving control unit 320 further receives a driving signal, generates a driving control signal based on the driving signal, and sends the driving control signal through the plurality of controller area network buses 3100 to control the vehicle 300.

The intelligent driving control unit 320 provided in this embodiment of this application generates the projection image data based on the external environment data and sends the projection image data to the drive projection apparatus 330, so that the drive projection apparatus 330 outputs the projection image based on the projection image data. In comparison with the link topology in the vehicle 200, a link topology is simpler, a data transmission link is shorter, and a data transmission delay can be reduced. In addition, the at least one sensor 310 includes a plurality of types of sensors, and the intelligent driving control unit 320 has a stronger data processing capability. Therefore, high-level autonomous driving can be implemented, and user experience can be improved.

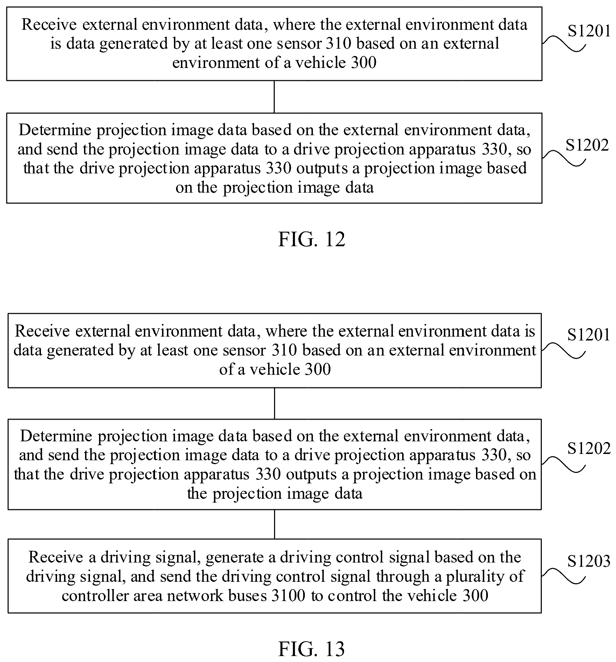

Based on this, as shown in FIG. 12, an embodiment of this application further provides an intelligent driving control method. The intelligent driving control method may be applied to the intelligent driving control unit 320. A structure of the intelligent driving control unit 320 may be the structure of the intelligent driving control unit 320 shown in any one of FIG. 3, and FIG. 5 to FIG. 9. An input end of the intelligent driving control unit 320 is coupled to an output end of the at least one sensor 310, and a first output end of the intelligent driving control unit 320 is coupled to a first input end of the drive projection apparatus 330. The method includes steps S1201 and S1202.

S1201: Receive external environment data, where the external environment data is data generated by at least one sensor 310 based on an external environment of a vehicle 300.

S1202: Determine projection image data based on the external environment data, and send the projection image data to a drive projection apparatus 330, so that the drive projection apparatus 330 outputs a projection image based on the projection image data.

In a possible embodiment, a second output end of the intelligent driving control unit 320 is coupled to an input end of the vehicle control unit 340, and an output end of the vehicle control unit 340 is coupled to a second input end of the drive projection apparatus 330. Step S1202 includes: outputting a first control signal, where the first control signal controls the vehicle control unit 340 to output a second control signal, and the second control signal controls the drive projection apparatus 330 to output the projection image based on the projection image data.

In a possible embodiment, the intelligent driving control unit 320 includes a system-on-chip 321 and a microprocessor 322. An input end of the system-on-chip 321 is coupled to a first input end of the intelligent driving control unit 320, an output end of the system-on-chip 321 is coupled to the first output end of the intelligent driving control unit 320, and an output end of the microprocessor 322 is coupled to the second output end of the intelligent driving control unit 320. Step S1202 includes: The system-on-chip 321 generates the projection image data based on the external environment data. The microprocessor 322 outputs a third control signal, where the third control signal controls the drive projection apparatus 330 to output the projection image based on the projection image data.

In a possible embodiment, as shown in FIG. 13, the second output end of the intelligent driving control unit 320 is coupled to a plurality of controller area network buses 3100, and the method further includes step S1203.

S1203: Receive a driving signal, generate a driving control signal based on the driving signal, and send the driving control signal through the plurality of controller area network buses 3100 to control the vehicle 300.

The related descriptions of the vehicle 300 provided above may be applied to the vehicle control method, the intelligent driving control unit 320, and the intelligent driving control method. Details are not described herein again in this embodiment of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A vehicle, wherein the vehicle comprises at least one sensor, an intelligent driving control unit, and a drive projection apparatus, an output end of the at least one sensor is coupled to an input end of the intelligent driving control unit, and a first output end of the intelligent driving control unit is coupled to a first input end of the drive projection apparatus;
the at least one sensor is configured to generate external environment data based on an external environment of the vehicle, and send the external environment data to the intelligent driving control unit;
the intelligent driving control unit is configured to generate projection image data based on the external environment data, and send the projection image data to the drive projection apparatus; and
the drive projection apparatus is configured to output a projection image based on the projection image data.

2. The vehicle according to claim 1, wherein the vehicle further comprises a vehicle control unit, and the vehicle control unit is configured to control the drive projection apparatus to output the projection image based on the projection image data.

3. The vehicle according to claim 2, wherein an input end of the vehicle control unit is coupled to a second output end of the intelligent driving control unit, and an output end of the vehicle control unit is coupled to a second input end of the drive projection apparatus;
the intelligent driving control unit is further configured to output a first control signal; and
the vehicle control unit is configured to output a second control signal based on the first control signal, wherein the second control signal is used to control the drive projection apparatus to output the projection image based on the projection image data.

4. The vehicle according to any one of claims 1 to 3, wherein the intelligent driving control unit comprises a system-on-chip and a microprocessor, an input end of the system-on-chip is coupled to the input end of the intelligent driving control unit, an output end of the system-on-chip is coupled to the first output end of the intelligent driving control unit, and an output end of the microprocessor is coupled to the second output end of the intelligent driving control unit;
the system-on-chip is configured to generate the projection image data based on the external environment data; and
the microprocessor is configured to output a third control signal, wherein the third control signal is used to control the drive projection apparatus to output the projection image based on the projection image data.

5. The vehicle according to any one of claims 1 to 4, wherein the drive projection apparatus comprises a drive circuit and a projection circuit, and an output end of the drive circuit is coupled to an input end of the projection circuit;
the drive circuit is configured to receive a control signal, and generate a drive signal based on the control signal; and
the projection circuit is configured to output the projection image based on the projection image data under driving of the drive signal.

6. The vehicle according to claim 5, wherein the projection circuit comprises a headlamp of the vehicle.

7. The vehicle according to any one of claims 1 to 6, wherein the vehicle further comprises a plurality of controller area network buses, and the plurality of controller area network buses are coupled to the second output end of the intelligent driving control unit; and
the intelligent driving control unit is further configured to receive a driving signal, generate a driving control signal based on the driving signal, and send the driving control signal through the plurality of controller area network buses to control the vehicle.

8. The vehicle according to claim 7, wherein the plurality of controller area network buses comprise a chassis controller area network bus, a chassis redundant controller area network bus, and a power controller area network bus.

9. The vehicle according to any one of claims 1 to 8, wherein the at least one sensor comprises at least one of a camera, a microwave radar, and a lidar.

10. A vehicle control method, wherein the vehicle comprises at least one sensor, an intelligent driving control unit, and a drive projection apparatus, an output end of the at least one sensor is coupled to an input end of the intelligent driving control unit, a first output end of the intelligent driving control unit is coupled to a first input end of the drive projection apparatus, and the method comprises:
generating, by the at least one sensor, external environment data based on an external environment of the vehicle, and sending the external environment data to the intelligent driving control unit;
generating, by the intelligent driving control unit, projection image data based on the external environment data, and sending the projection image data to the drive projection apparatus; and
outputting, by the drive projection apparatus, a projection image based on the projection image data.

11. The method according to claim 10, wherein the vehicle further comprises a vehicle control unit, and outputting, by the drive projection apparatus, the projection image based on the projection image data comprises:
outputting, by the drive projection apparatus, the projection image based on the projection image data under control of the vehicle control unit.

12. The method according to claim 11, wherein an input end of the vehicle control unit is coupled to a second output end of the intelligent driving control unit, an output end of the vehicle control unit is coupled to a second input end of the drive projection apparatus, and the method further comprises:
outputting, by the intelligent driving control unit, a first control signal; and
outputting, by the vehicle control unit, a second control signal based on the first control signal, wherein the second control signal is used to control the drive projection apparatus to output the projection image based on the projection image data.

13. The method according to claim 11 or 12, wherein the intelligent driving control unit comprises a system-on-chip and a microprocessor, an input end of the system-on-chip is coupled to the input end of the intelligent driving control unit, an output end of the system-on-chip is coupled to the first output end of the intelligent driving control unit, and an output end of the microprocessor is coupled to the second output end of the intelligent driving control unit;
generating, by the intelligent driving control unit, the projection image data based on the external environment data comprises: generating, by the system-on-chip, the projection image data based on the external environment data; and
outputting, by the drive projection apparatus, the projection image based on the projection image data comprises: outputting, by the drive projection apparatus, the projection image based on the projection image data under control of a third control signal output by the microprocessor.

14. The method according to claim 12 or 13, wherein the drive projection apparatus comprises a drive circuit and a projection circuit, an output end of the drive circuit is coupled to an input end of the projection circuit, and outputting, by the drive projection apparatus, the projection image based on the projection image data comprises:
receiving, by the drive circuit, a control signal, and generating a drive signal based on the control signal; and
outputting, by the projection circuit under driving of the drive signal, the projection image based on the projection image data.

15. The method according to claim 11 or 12, wherein the vehicle further comprises a plurality of controller area network buses, the plurality of controller area network buses are coupled to the second output end of the intelligent driving control unit, and the method further comprises:
when the vehicle control unit is faulty, receiving, by the intelligent driving control unit, a driving signal, generating a driving control signal based on the driving signal, and sending the driving control signal through the plurality of controller area network buses to control the vehicle.

16. An intelligent driving control unit, wherein an input end of the intelligent driving control unit is coupled to an output end of at least one sensor, a first output end of the intelligent driving control unit is coupled to a first input end of a drive projection apparatus, and the intelligent driving control unit is configured to:
receive external environment data, wherein the external environment data is generated by the at least one sensor based on an external environment of a vehicle; and
determine projection image data based on the external environment data, and send the projection image data to the drive projection apparatus, so that the drive projection apparatus outputs a projection image based on the projection image data.

17. The intelligent driving control unit according to claim 16, wherein a second output end of the intelligent driving control unit is coupled to an input end of a vehicle control unit, and an output end of the vehicle control unit is coupled to a second input end of the drive projection apparatus; and
the intelligent driving control unit is further configured to output a first control signal, wherein the first control signal is used to control the vehicle control unit to output a second control signal, and the second control signal is used to control the drive projection apparatus to output the projection image based on the projection image data.

18. The intelligent driving control unit according to claim 16 or 17, wherein the intelligent driving control unit comprises a system-on-chip and a microprocessor, an input end of the system-on-chip is coupled to a first input end of the intelligent driving control unit, an output end of the system-on-chip is coupled to the first output end of the intelligent driving control unit, and an output end of the microprocessor is coupled to the second output end of the intelligent driving control unit;
the system-on-chip is configured to generate the projection image data based on the external environment data; and
the microprocessor is configured to output a third control signal, wherein the third control signal is used to control the drive projection apparatus to output the projection image based on the projection image data.

19. The intelligent driving control unit according to any one of claims 16 to 18, wherein the second output end of the intelligent driving control unit is coupled to a plurality of controller area network buses; and
the intelligent driving control unit is further configured to receive a driving signal, generate a driving control signal based on the driving signal, and send the driving control signal through the plurality of controller area network buses to control the vehicle.
